(19) Europäisches Patentamt
European Patent Office
Office européen des brevets

(11) **EP 2 579 535 B1**

(12) **EUROPEAN PATENT SPECIFICATION**

(45) Date of publication and mention
of the grant of the patent:
**01.05.2019 Bulletin 2019/18**

(21) Application number: **11786087.4**

(22) Date of filing: **25.05.2011**

(51) Int Cl.:
*H04L 27/34* (2006.01)   *H04B 7/06* (2006.01)
*H04L 1/18* (2006.01)   *H04W 76/28* (2018.01)
*H04L 27/26* (2006.01)   *H04L 27/18* (2006.01)

(86) International application number:
**PCT/CN2011/074657**

(87) International publication number:
**WO 2011/147315 (01.12.2011 Gazette 2011/48)**

(54) **METHOD AND APPARATUS FOR RECEIVING SIGNALS**

VERFAHREN UND VORRICHTUNG FÜR DEN EMPFANG VON SIGNALEN

PROCÉDÉ ET APPAREIL PERMETTANT DE RECEVOIR DES SIGNAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2010 CN 201010189990**

(43) Date of publication of application:
**10.04.2013 Bulletin 2013/15**

(73) Proprietor: **China Academy of
Telecommunications Technology
Hai Dian District
Beijing 100191 (CN)**

(72) Inventors:
• **SHEN, Zukang**
**Beijing 100191 (CN)**
• **LIN, Yanan**
**Beijing 100191 (CN)**
• **GAO, Xuejuan**
**Beijing 100191 (CN)**
• **PAN, Xueming**
**Beijing 100191 (CN)**

(74) Representative: **Lantos, Mihaly et al
Danubia
Patent & Law Office LLC
Bajcsy-Zsilinszky út 16
1051 Budapest (HU)**

(56) References cited:
EP-A1- 1 913 722    EP-A1- 2 180 621
WO-A1-2006/069269    CN-A- 1 767 514
CN-A- 101 442 361    CN-A- 101 529 772
US-A1- 2008 075 046

**Description**

**Field of the invention**

The present invention relates to the field of communication technology, and in particular to a method and an apparatus for receiving a signal.

**Background of the invention**

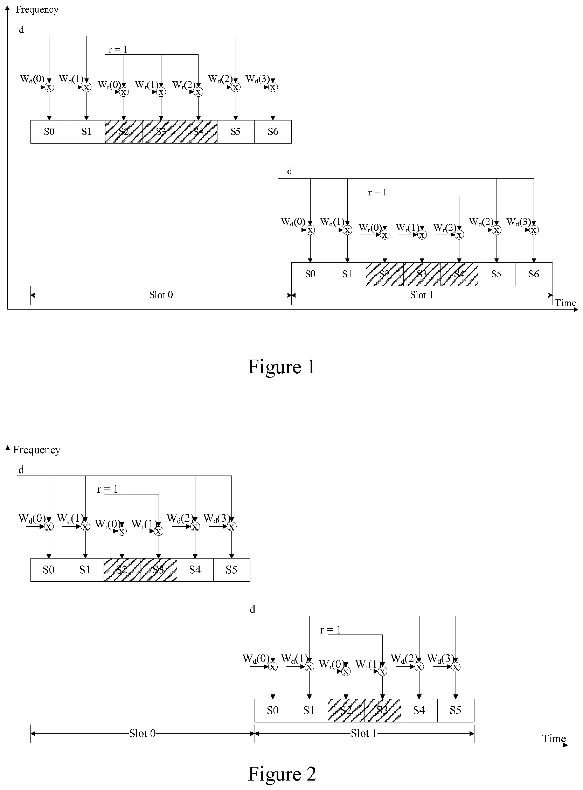

In a Normal CP (Cyclic Prefix) of a 3GPP (a 3rd Generation Partnership Project) LTE (Long Term Evolution), a slot includes 7 SC-FDMA (Single Carrier Frequency Division Multiple Access) symbols. A transmission mode of ACK/NAK (Acknowledge Character/ Negative Acknowledge) is shown in Figure 1. Wherein, [S0, S1, ..., S6] represents the 7 SC-FDMA symbols in the slot. d is a ACK/NAK symbol to be transmitted. If the symbol includes 1 ACK/NAK bit, the d is a constellation point of BPSK (Binary Phase Shift Keying). If the symbol includes 2 ACK/NAK bits, the d is a constellation point of QPSK (Quadrature Phase Shift Keying). A SC-FDMA symbol [S0, S1, S5, S6] is used for transmitting the ACK/NAK data (d). Wd =[Wd(0) Wd(1) Wd(2) Wd(3)] is a OC (Orthogonal Cover) of the ACK/NAK data. In the LTE, a value of the Wd may be OCd0 = [1 1 1 1]; OCd1 = [1 -1 1 -1]; or OCd2 = [1 -1 -1 1]. r is a pilot signal and is equal to 1. A SC-FDMA symbol [S2, S3, S4] is used for transmitting the pilot signal r. Wr = [Wr(0) Wr(1) Wr(2)] is a spread spectrum code of the pilot signal.

In an Extended CP of the 3GPP LTE, a slot includes 6 SC-FDMA symbols. A transmission mode of the ACK/NAK is shown in Figure 2. Wherein, [S0, S1,...,S5] represents the 6 SC-FDMA symbols in the slot. d represents the ACK/NAK symbol to be transmitted. If the symbol includes 1 ACK/NAK bit, then d is a constellation point of BPSK. If the symbol includes 2 ACK/NAK bits, then d is a constellation point of QPSK. A SC-FDMA symbol [S0, S1, S4, S5] is used for transmitting ACK/NAK data (d). Wd = [Wd(0) Wd(1) Wd(2) Wd(3)] is the OC of the ACK/NAK data. In the LTE, a value of the Wd maybe be OCd0 = [1 1 1 1], or OCd2 = [1 -1 -1 1]. r is a pilot signal and is equal to 1. A SC-FDMA symbol [S2, S3] is used for transmitting the pilot signal r. Wr = [Wr(0) Wr(1) Wr(2)] is a spread spectrum code of the pilot signal. In the LTE, a value of Wr may be OCr0 = [1 1], or OCr2 = [1 -1]. A subframe is comprised of 2 slots and ACK/NAK is transmitted repeatedly on the 2 slots of the subframe, as shown in Figure 2.

In the 3GPP LTE, a RB (Resource Block) is comprised of 12 REs (Resource Elements) and each RE is 15kHz in a frequency domain. For an ACK/NAK transmission, a sequence with a length equal to 12 is transmitted on a RB of a SC-FDMA symbol. 12 sequences generated through different CSs (Cyclic Shifts) of this sequence are mutually orthogonal. Therefore, an ACK/NAK channel on a RB is determined by the CSs and the OCs.

Table 1 and Table 2 correspond to the ACK/NACK data and the pilot signal, and show mappings from an ACK/NAK channel n to a (CS, OC) in a RB under the normal CP, respectively. Wherein, $\Delta_{PUCCH}$ is a spacing between the CSs used under the same OC. In the Table 1 and the Table 2, $\Delta_{PUCCH}$ is equal to 2. A sequential number n of the ACK/NAK channel may be acquired from a higher -layer signalling or from a CCE index (Control Channel Element index) of a PDCCH (Physical Downlink Control Channel).

Table 1 Mapping from the ACK/NAK channel n to the (CS, OC), data, $\Delta$PUCCH = 2, normal CP

| CS | OCd0= [1 1 1 1] | OCd1= [1 -1 1 -1] | OCd2 = [1 -1 -1 1] |
|----|-----------------|-------------------|--------------------|
| 0 | n = 0 | | n = 12 |
| 1 | | n = 6 | |
| 2 | n = 1 | | n = 13 |
| 3 | | n = 7 | |
| 4 | n = 2 | | n = 14 |
| 5 | | n = 8 | |
| 6 | n = 3 | | n = 15 |
| 7 | | n = 9 | |
| 8 | n = 4 | | n = 16 |
| 9 | | n = 10 | |
| 10 | n = 5 | | n = 17 |
| 11 | | n = 11 | |

Table 2 Mapping from the ACK/NAK channel n to the (CS, OC), pilot, $\Delta$PUCCH = 2, normal CP

| CS | OCr0= [1 1 1] | OCr1= [1 $e^{j2\pi/3}$ $e^{j4\pi/3}$] | OCr2 = [1 $e^{j4\pi/3}$ $e^{j2\pi/3}$] |
|---|---|---|---|
| 0 | n = 0 | | n = 12 |
| 1 | | n = 6 | |
| 2 | n = 1 | | n = 13 |
| 3 | | n = 7 | |
| 4 | n = 2 | | n = 14 |
| 5 | | n = 8 | |
| 6 | n = 3 | | n = 15 |
| 7 | | n = 9 | |
| 8 | n = 4 | | n = 16 |
| 9 | | n = 10 | |
| 10 | n = 5 | | n = 17 |
| 11 | | n = 11 | |

Table 3 and Table 4 correspond to the ACK/NACK data and the pilot, respectfully, and show mappings from the ACK/NAK channel n to the (CS, OC) in a RB under the extended CP. Wherein, $\Delta$PUCCH is the spacing between CSs used under the same OC. In the Tables 3 and 4, $\Delta$PUCCH is equal to 2. The sequential number n of the ACK/NAK channel may be either acquired from a higher-layer signalling or from a CCE index (Control Channel Element index) of the PDCCH (Physical Downlink Control Channel).

Table 3 Mapping from ACK/NAK channel n to (CS, OC), data, $\Delta$PUCCH = 2, extended CP

| CS | OCd0= [1 1 1 1] | OCd2= [1 -1 -1 1] |
|---|---|---|
| 0 | n = 0 | |
| 1 | | n = 6 |
| 2 | N = 1 | |
| 3 | | n = 7 |
| 4 | N = 2 | |
| 5 | | n = 8 |
| 6 | N = 3 | |
| 7 | | n = 9 |
| 8 | N = 4 | |
| 9 | | n = 10 |
| 10 | N = 5 | |
| 11 | | n = 11 |

Table 4 Mapping from ACK/NAK Channel n to (CS, OC), pilot, $\Delta$PUCCH = 2, extended CP

| CS | OCr0= [1 1] | OCr1= [1 -1] |
|---|---|---|
| 0 | n = 0 | |
| 1 | | n = 6 |

(continued)

| CS | OCr0= [1 1] | OCr1= [1 -1] |
|---|---|---|
| 2 | n = 1 | |
| 3 | | n = 7 |
| 4 | n = 2 | |
| 5 | | n = 8 |
| 6 | n = 3 | |
| 7 | | n = 9 |
| 8 | n = 4 | |
| 9 | | n = 10 |
| 10 | n = 5 | |
| 11 | | n = 11 |

For a relevant transmission mode for the ACK/NAK, common demodulation algorithms may be used for demodulation thereof, i.e., channel estimation is performed in a first step according to pilot symbols, and then data demodulation is performed according to the channel estimation and a demodulation result is acquired. Since the channel estimation and the data demodulation are implemented in separate steps in the above demodulation algorithm, with the pilot symbols being processed in the first step and operation of data symbols being performed in a second step. a correlation between the pilot symbols and the data symbols is not fully utilized, and thus the demodulation performance is poor.

An European patent publication EP 1913722 A1 discloses a dedicated control channel detection method for enhanced dedicated channel, including decoding a control channel (E-DPCCH) associated with a data physical channel to produce at least one decoding metric, and detecting whether a control channel (E-DPCCH) signal is present on the decoded control channel based on the decoding energy metric and a threshold. However, EP 1913722 A1 does not disclose joint demodulation of data and pilot symbol and judging whether it is discontinuous transmission (DTX) at the same time.

## Summary of the Invention

The invention is set out in the appended claims. The embodiments and/or examples of the following description, which are not covered by the appended claims, are considered as not being part of the present invention.

Embodiments of the present invention provide a method and an apparatus for receiving a signal, to realize joint demodulation of data symbols and pilot symbols and judge whether a transmission is a discontinuous transmission (DTX) or not.

The embodiments of the present invention provide a method for receiving a signal, and the method includes:

receiving the signal on one or more receiving branches, wherein each of the one or more receiving branches includes at least two reception units including at least one data reception unit and at least one pilot reception unit, and said signal is a codeword in a transmission codebook;
calculating a metric value for each codeword of said transmission codebook according to said received signal and obtaining a maximal metric value;
determining the codeword corresponding to said maximal metric value as a demodulation output in case that this maximal metric value is larger than a threshold value;
determining discontinuously-sent DTX as the demodulation output if said maximal metric value is smaller than threshold value.

The embodiments of the present invention provide the apparatus for receiving a signal, and the apparatus includes:

a receiving module configured to receive the signal on one or more receiving branches, wherein each of the one or more receiving branches includes at least two reception unit including at least one data reception unit and at least one pilot reception unit, and said signal is a codeword in a transmission codebook;

a calculation module configured to calculate a metric value for each codeword of said transmission codebook according to said received signal and obtaining a maximal metric value;

a demodulation module configured to determine the codeword corresponding to said maximal metric value as a demodulation output in case that said maximal metric value is larger than a threshold value; and determine discontinuously-transmission DTX as the demodulation output in case that such maximal metric value is less than threshold value.

Compared with the relevant art, the embodiments of the present invention at least possess the following advantages: in the embodiments of the present invention, perform joint demodulation of data symbols and pilot symbols to make demodulation results more reliable, and meanwhile, whether a transmission is discontinuous transmission (DTX) or not is determined based on the joint demodulation of the data symbol and the pilot symbol.

**Brief description of the drawings**

In order to more clearly explain technical solutions in embodiments of the present invention or in the art, attached drawings used in description of the embodiments of the present invention or in the art shall be briefly introduced below. Obviously, the attached drawings described below are only some embodiments of the present invention, and for one of ordinary skills in the art, other attached drawings may also be acquired based on these drawings on the premise of paying no creative work.

Figure 1 is a diagram of a transmission mode of ACK/NAK in Normal CP in 3GPP LTE in the art;
Figure 2 is a diagram of a transmission mode of ACK/NAK in extended CP in 3GPP LTE in the art;
Figure 3 is a flow diagram of a method for receiving a signal provided by embodiment I of the present invention;
Figure 4 is a structure diagram of an apparatus for receiving a signal provided by embodiment V of the present invention.

**Detailed description of the embodiments of the present invention**

Technical solutions of the embodiments of the present invention will be described clearly and completely hereinafter in combination with the drawings of the embodiments of the present invention. Obviously, the embodiments described below are only a part, but not all, of the embodiments of the present invention. Other embodiments obtained by one of ordinary skills in the art on the premise of paying no creative work based on the embodiments of the present invention all fall into the protection scope of the embodiments of the present invention.

Embodiment I

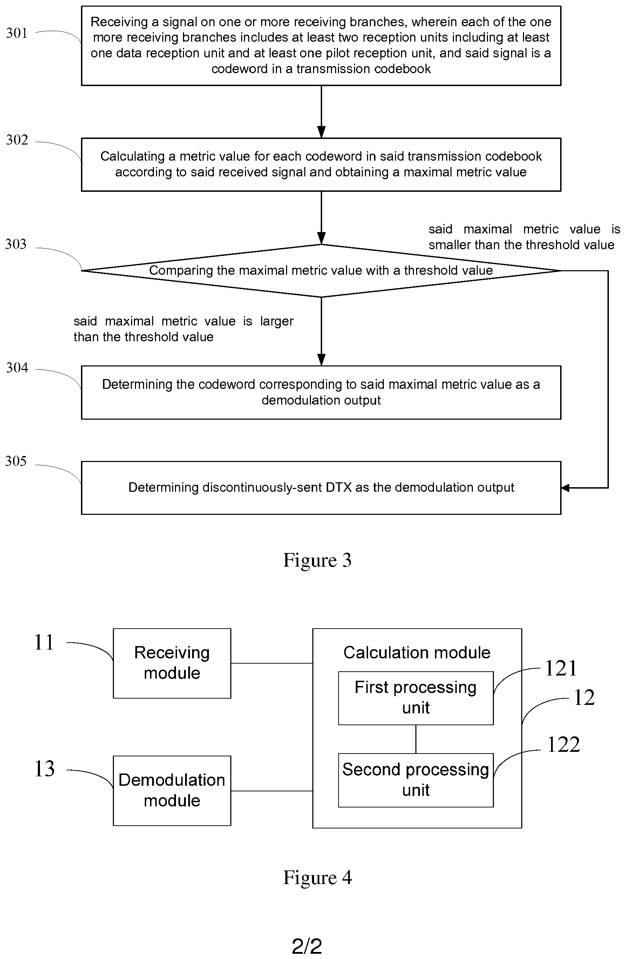

Embodiment I of the present invention provides a method for receiving a signal as shown in Figure 3. The method includes steps 301-305.

Step 301: receiving the signal on one or more receiving branches, each of the one or more receiving branches including at least two reception units, wherein the at least two reception units include at least one data reception unit and at least one pilot reception unit, and said signal is a codeword in a transmission codebook;

Step 302: calculating a metric value for each codeword in said transmission codebook according to said received signal and obtaining a maximal metric value;

Step 303: comparing the maximal metric value with a threshold value, and in case that said maximal metric value is larger than the threshold value, jumping to step 304, otherwise if said maximal metric value is smaller than the threshold value, jumping step 305;

Step 304: determining the codeword corresponding to said maximal metric value as the demodulation output; and

Step 305: determining discontinuously-sent DTX as the demodulation output.

Calculating the metric value for each codeword in said transmission codebook includes:

processing the received signal on all of the at least two reception units of each said receiving branch and said codeword to obtain a temporary metric value corresponding to said receiving branch and said codeword;

summing the temporary metric values corresponding to all of said one or more receiving branches and said codeword to obtain the metric value for said codeword.

Processing the received signal on all of the at least two reception units of each said receiving branch and said codeword to obtain a temporary metric value corresponding to said receiving branch and said codeword, includes:

said codeword including M elements, and said M being the number of reception units on said receiving branch, multiplying a conjugation of a mth (1≤m≤M) element of said codeword by a received signal on a mth reception unit to obtain a demodulation value corresponding to the mth reception unit; and

summing said demodulation values corresponding to all of the reception units of said receiving branch, and taking a summation value of the demodulation values as said temporary metric value corresponding to said receiving branch and said codeword.

Processing the received signal on all of the at least two reception units of each said receiving branch and the codeword to obtain a temporary metric value corresponding to said receiving branch and said codeword, includes:

said codeword including M elements, and said M being the number of reception units on said receiving branch, multiplying the conjugation of the mth (1≤m≤M) element of said codeword by a received signal on the mth reception unit to obtain the demodulation value corresponding to the mth reception unit; and

summing said demodulation values corresponding to all of the reception units of said receiving branch, and taking a square of the summation value of the demodulation values as said temporary metric value corresponding to said receiving branch and said codeword.

Each of said receiving branches corresponds to an orthogonal channel, and the orthogonal channel may be achieved by orthogonality in a frequency domain, a time domain, a code division domain, a spatial domain, or a combination thereof.

Each reception unit corresponds to one OFDM symbol or one SC-FDMA symbol.

Embodiment II

Embodiment II of the present invention provides a method for receiving a signal, in which the ACK/NAK is taken as an example to specifically describe the method for receiving signals provided in Embodiment I.

To simplify description, the following abbreviations are used in Embodiment II of the present invention:

i: a transmission/reception instance index, i = 0, 1, ..., I,

j: a slot index, j = 0, 1, ..., J,

k: a receive antenna index, k = 0, 1, ..., K,

m: a channel index, m = 0, 1, ..., M,

s (i, j, m): a transmission signal on the transmission instance i, the slot j and the channel m,

y (i, j, m, k): a reception signal on the reception instance i, the slot j, the channel m and the receive antenna k,

s = [s(0, 0, 0), s(1, 0, 0), ..., s(I, J, M)]: a codeword of a transmission signal, and the codeword including pilot symbols and data symbols transmitting useful information,

S: a codebook of the transmission signal, and the codebook including all possible s,

$\delta$: a DTX detection threshold,

wherein, I, J, K and M are non-negative integers, and the transmission/reception instance refers to a transmission unit. In an OFDM system, the transmission/reception instance may be an OFDM symbol. In a SC-FDMA system, the transmission/reception instance may be a SC-FDMA symbol.

A demodulation algorithm for the ACK/NAK is to calculate

$$E = \max_{S}\left( \sum_{k=0}^{K}\sum_{j=0}^{J}\sum_{m=0}^{M}\left| \sum_{i=0}^{I}\left(y(i,j,m,k)\times s^{*}(i,j,m)\right)\right|^{2}\right) \qquad (1)$$

a corresponding codeword $s_{opt}$ may be obtained according to this formula. If $E \leq \delta$ or $E < \delta$, determining the DTX as the demodulation output, or otherwise, determining an information bit corresponding to the $s_{opt}$ as the demodulation output.

A main idea of the demodulation algorithm is as follows:

multiplying the received signal with a conjugation of one possible codeword;

performing coherent combining of the multiplied signal on one slot, one receive antenna and one channel. It's assumed herein that different transmission/reception instances on one slot, one receive antenna and one channel have similar channel conditions;

perform non-coherent combining of the coherent-combined signals on different slots, differnent receive antennas and differnt channels to obtain a value relating to the received signal and said codeword.It's assumed herein that channel condition is different on different slots, different receive antennas and differnt channels;

for each codeword, repeating the above operations to obtain a relevant value corresponding to the codeword;

select a codeword $s_{opt}$ with a maximum relevant value from all codewords and the relevant value $E$ corresponding to codeword.

If $E \leq \delta$ or $E < \delta$, determining the DTX as the demodulation output, or otherwise, determing the information bit corresponding to $s_{opt}$ as the demodulation output.

In the present invention, for example, the formula (1) may also be modified as shown below:

$$E = \max_S \left( \sum_{k=0}^{K} \sum_{j=0}^{J} \sum_{m=0}^{M} \left| \sum_{i=0}^{I} \left( y(i, j, m, k) \times s^*(i, j, m) \right) \right| \right),$$

or

$$E = \max_S \left( \sum_{k=0}^{K} \sum_{j=0}^{J} \left| \sum_{m=0}^{M} \sum_{i=0}^{I} \left( y(i, j, m, k) \times s^*(i, j, m) \right) \right|^2 \right),$$

or

$$E = \max_S \left( \sum_{k=0}^{K} \sum_{j=0}^{J} \left| \sum_{m=0}^{M} \sum_{i=0}^{I} \left( y(i, j, m, k) \times s^*(i, j, m) \right) \right| \right),$$

or

$$E = \max_S \left( \sum_{k=0}^{K} \sum_{j=0}^{J} \left| \sum_{i=0}^{I} \left( y(i, j, m, k) \times s^*(i, j, m) \right) \right| \right),$$

wherein m corresponds to the channel index s (i,j,m) of which s (i,j,m) $\neq$0.

Embodiment III

This embodiment will introduce the transmission codebook and the codewords involved in the embodiment I and the embodiment II.

In a transmission mode of ACK/NAK based on 3GPP LTE/LTE-A, a slot has 7 SC-FDMA symbols (I = 6), a subframe has 2 slots (J = 1) and 1 channel (M = 0). If two ACK/NAK bits are transmitted, the ACK/NAK bits may be (A,A), (A,N), (N,A), (N,N). The codebook S includes codewords s1, s2, s3 and s4 as shown in Table 5.

Table 5

|  | j = 0 | | | | | | | j = 1 | | | | | | |
|---|---|---|---|---|---|---|---|---|---|---|---|---|---|---|
|  | i=0 | i=1 | i=2 | i=3 | I=4 | i=5 | i=6 | i=0 | i=1 | i=2 | i=3 | i=4 | i=5 | i=6 |
| s1 | 1 | 1 | 1 | 1 | 1 | 1 | 1 | 1 | 1 | 1 | 1 | 1 | 1 | 1 |
| s2 | j | j | 1 | 1 | 1 | j | j | j | j | 1 | 1 | 1 | j | j |
| s3 | -j | -j | 1 | 1 | 1 | -j | -j | -j | -j | 1 | 1 | 1 | -j | -j |
| s4 | -1 | -1 | 1 | 1 | 1 | -1 | -1 | -1 | -1 | 1 | 1 | 1 | -1 | -1 |

Embodiment IV

This embodiment will describe the transmission codebook and codewords involved in the embodiment I and the embodiment II.

For the transmission mode of the ACK/NAK based on 3GPP LTE/LTE-A, a slot has 7 SC-FDMA symbols (I = 6), a subframe has 2 slots (J = 1) and 2 channels (M = 1). If two ACK/NAK bits are transmitted, the ACK/NAK bits may be (A,A), (A,N), (N,A), (N,N). The codebook S includes codewords s1, s2, s3 and s4 as shown in Table 6.

Table 6

| m | j | I | s1 | s2 | s3 | s4 |
|---|---|---|----|----|----|----|
| 0 | 0 | 0 | 1 | -1 | 0 | 0 |
|   |   | 1 | 1 | -1 | 0 | 0 |
|   |   | 2 | 1 | 1 | 0 | 0 |
|   |   | 3 | 1 | 1 | 0 | 0 |
|   |   | 4 | 1 | 1 | 0 | 0 |
|   |   | 5 | 1 | -1 | 0 | 0 |
|   |   | 6 | 1 | -1 | 0 | 0 |
|   | 1 | 0 | 1 | -1 | 0 | 0 |
|   |   | 1 | 1 | -1 | 0 | 0 |
|   |   | 2 | 1 | 1 | 0 | 0 |
|   |   | 3 | 1 | 1 | 0 | 0 |
|   |   | 4 | 1 | 1 | 0 | 0 |
|   |   | 5 | 1 | -1 | 0 | 0 |
|   |   | 6 | 1 | -1 | 0 | 0 |
| 1 | 0 | 0 | 0 | 0 | 1 | -1 |
|   |   | 1 | 0 | 0 | 1 | -1 |
|   |   | 2 | 0 | 0 | 1 | 1 |
|   |   | 3 | 0 | 0 | 1 | 1 |
|   |   | 4 | 0 | 0 | 1 | 1 |
|   |   | 5 | 0 | 0 | 1 | -1 |
|   |   | 6 | 0 | 0 | 1 | -1 |
|   | 1 | 0 | 0 | 0 | 1 | -1 |
|   |   | 1 | 0 | 0 | 1 | -1 |
|   |   | 2 | 0 | 0 | 1 | 1 |
|   |   | 3 | 0 | 0 | 1 | 1 |
|   |   | 4 | 0 | 0 | 1 | 1 |
|   |   | 5 | 0 | 0 | 1 | -1 |
|   |   | 6 | 0 | 0 | 1 | -1 |

Joint demodulation of the data symbols and the pilot symbols is performed through the method provided by the embodiments of the present invention, so as to make demodulation results more reliable. Meanwhile; whether a transmission is the discontinuous transmission (DTX) or not is determined based on the joint demodulation of the data symbols and the pilot symbols.

Embodiment V

Based on the same technical concepts as those of the embodiments of the above method, the embodiment V of the present invention provides an apparatus for receiving a signal as shown in Figure 4, and the apparatus includes a receiving module 11, a calculation module 12, and a demodulation module 13.

The receiving module 11 is configured to receive the signal on one or more receiving branches, each of the one or more receiving branches including at least two reception units and the at least two reception units including at least one data reception unit and at least one pilot reception unit, and said signal is a codeword in a transmission codebook.

The calculation module 12 is configured to calculate the metric value for each codeword in said transmission codebook according to said received signal received by the receiving module 11 and obtaining the maximal metric value.

The demodulation module 13 is configured to determine the codeword corresponding to said maximal metric value as the demodulation output if said maximal metric value is larger than the threshold value, and determine the discontinuous-transmission DTX as the demodulation output if said maximal metric value is smaller than a threshold value.

Said calculation module 12 includes: a first processing module 121 configured to process the received signals on all of the reception units of each said receiving branch and the codeword to obtain the temporary metric value corresponding to said receiving branch and said codeword; and a second processing module 121 configured to sum the temporary metric values corresponding to all receiving branches and said codeword to obtain the metric value of said codeword.

Said first processing module 121 is further configured to multiply the conjugation of the $m^{th}$ ($1 \leq m \leq M$) element of said codeword by a received signal on the $m^{th}$ reception unit to obtain the demodulation value corresponding to the $m^{th}$ reception unit, wherein said codeword includes M elements, and said M is the number of reception units on said receiving branch; and sum said demodulation values corresponding to all of the reception units of said receiving branch, and taking the summation value of the demodulation values as said temporary metric value corresponding to said receiving branch and said codeword.

Said first processing module 121 is also configured to multiply the conjugation of the $m^{th}$ ($1 \leq m \leq M$) element of said codeword by the received signal on the $m^{th}$ reception unit to obtain the demodulation value corresponding to the $m^{th}$ reception unit, wherein said codeword includes M elements, and said M is number of reception units on said receiving branch; and sum said demodulation values corresponding to all of the reception units of said receiving branch, and taking the square of the summation value of the demodulation values as said temporary metric value corresponding to said receiving branch and said codeword.

Each said receiving branch corresponds to an orthogonal channel, and the orthogonal channel may be achieved by orthogonality in the frequency domain, the time domain, the code division domain, the spatial domain, or a combination thereof.

Each reception unit corresponds to one OFDM symbol or one SC-FDMA symbol.

In the embodiments of the present invention, the joint demodulation of the data symbols and the pilot symbols is performed to make the demodulation result more reliable. Meanwhile, whether the transmission is the discontinuous transmission (DTX) or not is determined based on the joint demodulation of the data symbols and the pilot symbols.

Through description of the above embodiments, one or ordinary skills in the art may clearly understand that the present invention may be realized with software and necessary general hardware platforms, and may also be realized through hardware. However, the former is better in many cases. Based on this understanding, the technical solutions of the present invention or parts making contributions to relevant art may be embodied in the form of software products. The software products are stored in a storage medium, including several instructions to enable a terminal (such as a handset, a personal computer, a server, or a network equipment, etc.) to implement the method described in all the embodiments of the present invention.

Only preferred embodiments of the present invention are mentioned above. It should be pointed out that one of ordinary skills in the art may make any improvement and modification without departing from the principle of the present invention, and the improvement and the modification should also fall into the protection scope of the present invention.

## Claims

1. A method for receiving a signal, the method being performed by an apparatus for receiving the signal, and comprising

   receiving (301) the signal on one or more receiving branches, wherein each of the one or more receiving branches corresponds to one orthogonal channel and comprises at least two reception units comprising at least one data reception unit and at least one pilot reception unit, and said signal is a codeword in a transmission codebook;

calculating (302) a metric value for each codeword of said transmission codebook according to said received signal and obtaining a maximal metric value;

determining (304) the codeword corresponding to said maximal metric value as a demodulation output in case that said maximal metric value is larger than a threshold value; and

determining (305) discontinuous-transmission DTX as the demodulation output in case that said maximal metric value is smaller than the threshold value;

**characterized in that**:

calculating a metric value for each codeword of said transmission codebook comprises:

processing the received signal on all of the at least two reception units of each said receiving branch and said codeword to obtain a temporary metric value corresponding to said receiving branch and said codeword; and

summing the temporary metric values corresponding to all of said one or more receiving branches and said codeword to obtain the metric value for said codeword.

2. The method of claim 1, **characterized in that**,

said codeword comprises M elements and said M is the number of the reception units on said receiving branch, and processing the received signal on all of the at least two reception units of each said receiving branch and said codeword to obtain a temporary metric value corresponding to said receiving branch and said codeword comprises:

multiplying a conjugation of a $m^{th}$ element of said codeword by a received signal on a $m^{th}$ reception unit to obtain a demodulation value corresponding to the $m^{th}$ reception unit, wherein m is larger than or equals to 1 and smaller than or equals to M; and

summing said demodulation values corresponding to all of the reception units of said receiving branch, and taking a summation value of the demodulation values as said temporary metric value corresponding to said receiving branch and said codeword.

3. The method of claim 1, **characterized in that**,

said codeword comprises M elements and said M is the number of the reception units on said receiving branch, and processing the received signal on all of the at least two reception units of each said receiving branch and said codewords to obtain a temporary metric value corresponding to said receiving branch and said codeword comprises:

multiplying a conjugation of a $m^{th}$ element of said codeword by a received signal on a $m^{th}$ reception unit to obtain a demodulation value corresponding to the $m^{th}$ reception unit, wherein m is larger than or equals to 1 and smaller than or equals to M; and

summing said demodulation values corresponding to all of the reception units of said receiving branch, and taking a square of a summation value of the demodulation values as said temporary metric value corresponding to said receiving branch and said codeword.

4. The method of claim 1, **characterized in that**,

the orthogonal channel is achieved by one of orthogonality in a frequency domain, orthogonality in a time domain and orthogonality in a code division domain, or a combination of two or three of the orthogonality in the frequency domain, the orthogonality in the time domain and the orthogonality in the code division domain.

5. The method of claim 1, **characterized in that**,

each of the reception units corresponds to one OFDM symbol or one SC-FDMA symbol.

6. An apparatus for receiving a signal, comprising:

a receiving module (11) configured to receive the signal on one or more receiving branches, wherein each of the one or more receiving branches corresponds to one orthogonal channel and comprises at least two reception units comprising at least one data reception unit and at least one pilot reception unit, and said signal is a codeword in a transmission codebook;

a calculation module (12) configured to calculate a metric value for each codeword of said transmission codebook according to said received signal and obtaining a maximal metric value;

a demodulation module (13) configured to determine the codeword corresponding to said maximal metric value as a demodulation output in case that said maximal metric value is larger than a threshold value, and determine discontinuous-transmission DTX as the demodulation output in case that said maximal metric value is smaller than the threshold value;
**characterized in that**:
the calculation module comprises:

a first processing unit (121) configured to process the received signal on all of the at least two reception units of each said receiving branch and said codeword to obtain a temporary metric value corresponding to said receiving branch and said codeword; and
a second processing unit (122) configured to sum the temporary metric values corresponding to all of said one or more receiving branches and said codeword to obtain the metric value for said codeword.

7. The apparatus of claim 6, **characterized in that**,

said codeword comprises M elements and said M is the number of the reception units on said receiving branch, and
said first processing module is further configured to:

multiply a conjugation of a $m^{th}$ element of said codeword by a received signal on a $m^{th}$ reception unit to obtain a demodulation value corresponding to the $m^{th}$ reception unit, wherein m is larger than or equals to 1 and smaller than or equals to M; and
sum said demodulation values corresponding to all of the reception units of said receiving branch, and take a summation value of the demodulation values as said temporary metric value corresponding to said receiving branch and said codeword.

8. The apparatus of claim 6, **characterized in that**,

said codeword comprises M elements and said M is the number of the reception units on said receiving branch, and
said first processing module is further configured to:

multiply a conjugation of a $m^{th}$ element of said codeword by a received signal on a $m^{th}$ reception unit to obtain a demodulation value corresponding to the $m^{th}$ reception unit, wherein m is larger than or equals to 1 and smaller than or equals to M; and
sum said demodulation values corresponding to all of the reception units of said receiving branch, and take a square of a summation value of the demodulation values as said temporary metric value corresponding to said receiving branch and said codeword.

9. The apparatus of claim 6, **characterized in that**,
the orthogonal channel is achieved by one of orthogonality in a frequency domain, a time domain, and a code division domain, or a combination of two or three of the orthogonality in the frequency domain, the orthogonality in the time domain and the orthogonality in the code division domain.

10. The apparatus of claim 6, **characterized in that**,
each of the reception units corresponds to one OFDM symbol or one SC-FDMA symbol.

**Patentansprüche**

1. Verfahren zum Empfangen eines Signals, wobei das Verfahren von einer Vorrichtung zum Empfangen des Signals durchgeführt wird, und umfasst
Empfangen (301) des Signals auf einem Empfangszweig oder mehreren Empfangszweigen, wobei jeder Empfangszweig oder jeder der mehreren Empfangszweige einem orthogonalen Kanal entspricht und mindestens zwei Empfangseinheiten umfasst, die mindestens eine Datenempfangseinheit und mindestens eine Pilot-Empfangseinheit umfassen, und das Signal ein Codewort in einem Übertragungscodebuch ist;
Berechnen (302) eines Metrikwerts für jedes Codewort des Übertragungscodebuchs gemäß dem empfangenen Signal und Erhalten eines maximalen Metrikwerts;
Bestimmen (304) des Codeworts, das dem maximalen Metrikwert entspricht, als eine Demodulationsausgabe, falls der maximale Metrikwert größer als ein Schwellenwert ist; und
Bestimmen (305) der diskontinuierlichen Übertragung DTX als die Demodulationsausgabe, falls der maximale Metrikwert kleiner als der Schwellenwert ist; **dadurch gekennzeichnet, dass**:
das Berechnen eines Metrikwerts für jedes Codewort des Übertragungscodebuchs umfasst:

Verarbeiten des empfangenen Signals auf allen der mindestens zwei Empfangseinheiten jedes Empfangszweigs und des Codeworts, um einen temporären Metrikwert zu erhalten, der dem Empfangszweig und dem Codewort entspricht; und
Summieren der temporären Metrikwerte, die allen des Empfangzweigs oder der mehreren Empfangszweige und des Codeworts entsprechen, um den Metrikwert für das Codewort zu erhalten.

2. Verfahren nach Anspruch 1, **dadurch gekennzeichnet, dass**,
das Codewort M Elemente umfasst und M die Anzahl der Empfangseinheiten auf dem Empfangszweig angibt, und das Verarbeiten des empfangenen Signals auf allen der mindestens zwei Empfangseinheiten jedes Empfangszweigs und des Codeworts, um einen temporären Metrikwert entsprechend dem Empfangszweig und dem Codewort zu erhalten, umfasst:

Multiplizieren einer Konjugation eines m-ten Elements des Codeworts durch ein empfangenes Signal auf einer m-ten Empfangseinheit, um einen Demodulationswert zu erhalten, der der m-ten Empfangseinheit entspricht, wobei m größer als oder gleich 1 und kleiner als oder gleich M ist; und
Summieren der Demodulationswerte, die allen Empfangseinheiten des Empfangszweigs entsprechen und Verwenden eines Summierungswerts der Demodulationswerte als temporären Metrikwert, der dem Empfangszweig und dem Codewort entspricht.

3. Verfahren nach Anspruch 1, **dadurch gekennzeichnet, dass**,
das Codewort M Elemente umfasst und M die Anzahl der Empfangseinheiten auf dem Empfangszweig angibt, und das Verarbeiten des empfangenen Signals auf allen der mindestens zwei Empfangseinheiten jedes Empfangszweigs und der Codewörter, um einen temporären Metrikwert entsprechend dem Empfangszweig und dem Codewort zu erhalten, umfasst:

Multiplizieren einer Konjugation eines m-ten Elements des Codeworts durch ein empfangenes Signal auf einer m-ten Empfangseinheit, um einen Demodulationswert zu erhalten, der der m-ten Empfangseinheit entspricht, wobei m größer als oder gleich 1 und kleiner als oder gleich M ist; und
Summieren der Demodulationswerte, die allen Empfangseinheiten des Empfangszweigs entsprechen, und Verwenden eines Quadrats eines Summierungswerts der Demodulationswerte als temporären Metrikwert, der dem Empfangszweig und dem Codewort entspricht.

4. Verfahren nach Anspruch 1, **dadurch gekennzeichnet, dass**,
der orthogonale Kanal erreicht wird durch eine Orthogonalität in einem Frequenzbereich, Orthogonalität in einem Zeitbereich und Orthogonalität in einem Code-Divisionsbereich oder durch eine Kombination von zwei oder drei aus der Orthogonalität in dem Frequenzbereich, der Orthogonalität in dem Zeitbereich und der Orthogonalität in dem Code-Divisionsbereich.

5. Verfahren nach Anspruch 1, **dadurch gekennzeichnet, dass**,
jede der Empfangseinheiten einem OFDM-Symbol oder einem SC-FDMA-Symbol entspricht.

6. Vorrichtung zum Empfangen eines Signals, umfassend:

ein Empfangsmodul (11), das zum Empfangen des Signals auf einem Empfangszweig oder mehreren Empfangszweigen ausgelegt ist, wobei jeder Empfangszweig oder jeder der mehreren Empfangszweige einem orthogonalen Kanal entspricht und mindestens zwei Empfangseinheiten umfasst, die mindestens eine Datenempfangseinheit und mindestens eine Pilot-Empfangseinheit umfassen, und das Signal ein Codewort in einem Übertragungscodebuch ist;
ein Berechnungsmodul (12), das zum Berechnen eines Metrikwerts für jedes Codewort des Übertragungscodebuchs gemäß dem empfangenen Signal und zum Erhalten eines maximalen Metrikwerts ausgelegt ist;
ein Demodulationsmodul (13), das zum Bestimmen des Codeworts entsprechend zu dem maximalen Metrikwert als Demodulationsausgabe ausgelegt ist, falls der maximale Metrikwert größer als ein Schwellenwert ist, und Bestimmen von diskontinuierlicher Übertragung DTX als Demodulationsausgabe, falls der maximale Metrikwert kleiner als der Schwellenwert ist;
**dadurch gekennzeichnet, dass**:

das Berechnungsmodul umfasst:

eine erste Verarbeitungseinheit (121), die zum Verarbeiten des empfangenen Signals auf allen der mindestens zwei Empfangseinheiten jedes Empfangszweigs und des Codeworts ausgelegt ist, um einen temporären Metrikwert entsprechend dem Empfangszweig und dem Codewort zu erhalten; und
eine zweite Verarbeitungseinheit (122), die zum Summieren der temporären Metrikwerte ausgelegt ist, die allen des einen Empfangszweigs oder der mehreren Empfangszweige und dem Codewort entsprechen, um den Metrikwert für das Codewort zu erhalten.

**7.** Vorrichtung nach Anspruch 6, **dadurch gekennzeichnet, dass**,
das Codewort M Elemente umfasst und M die Anzahl der Empfangseinheiten auf dem Empfangszweig angibt, und
das erste Verarbeitungsmodul ferner konfiguriert ist zum:

Multiplizieren einer Konjugation eines m-ten Elements des Codeworts durch ein empfangenes Signal auf einer m-ten Empfangseinheit, um einen Demodulationswert zu erhalten, der der m-ten Empfangseinheit entspricht, wobei m größer als oder gleich 1 und kleiner als oder gleich M ist; und
Summieren der Demodulationswerte, die allen Empfangseinheiten des Empfangszweigs entsprechen, und Verwenden eines Summenwerts der Demodulationswerte als temporären Metrikwert, der dem Empfangszweig und dem Codewort entspricht.

**8.** Vorrichtung nach Anspruch 6, **dadurch gekennzeichnet, dass**,
das Codewort M Elemente umfasst und M die Anzahl der Empfangseinheiten auf dem Empfangszweig angibt, und
das erste Verarbeitungsmodul ferner konfiguriert ist zum:

Multiplizieren einer Konjugation eines m-ten Elements des Codeworts durch ein empfangenes Signal auf einer m-ten Empfangseinheit, um einen Demodulationswert zu erhalten, der der m-ten Empfangseinheit entspricht, wobei m größer als oder gleich 1 und kleiner als oder gleich M ist; und
Summieren der Demodulationswerte, die allen Empfangseinheiten des Empfangszweigs entsprechen, und Verwenden eines Quadrats eines Summierungswerts der Demodulationswerte als temporären Metrikwert, der dem Empfangszweig und dem Codewort entspricht.

**9.** Vorrichtung nach Anspruch 6, **dadurch gekennzeichnet, dass**,
der orthogonale Kanal erreicht wird durch eine Orthogonalität in einem Frequenzbereich, einem Zeitbereich und einem Code-Divisionsbereich oder eine Kombination von zwei oder drei aus der Orthogonalität in dem Frequenzbereich, der Orthogonalität in dem Zeitbereich und der Orthogonalität in dem Code-Divisionsbereich.

**10.** Vorrichtung nach Anspruch 6, **dadurch gekennzeichnet, dass**,
jede der Empfangseinheiten einem OFDM-Symbol oder einem SC-FDMA-Symbol entspricht.

**Revendications**

**1.** Procédé de réception d'un signal, le procédé étant exécuté par un appareil de réception du signal, et comprenant recevoir (301) le signal sur une ou plusieurs branches de réception, dans lequel chacune des une ou plusieurs branches de réception correspond à un canal orthogonal et comprend au moins deux unités de réception comprenant au moins une unité de réception des données et au moins une unité de réception pilote, et ledit signal est un mot de code dans un livre de codes de transmission;
calculer (302) une valeur métrique pour chacun mot de code dudit livre de codes de transmission en fonction dudit signal reçu et obtenir une valeur métrique maximale;
déterminer (304) le mot de code correspondant à ladite valeur métrique maximale comme une sortie de démodulation dans le cas où ladite valeur métrique maximale est supérieure à une valeur seuil; et
déterminer (305) transmission discontinue DTX comme la sortie de démodulation dans le cas où ladite valeur métrique maximale est inférieure à la valeur seuil; **caractérisé en ce que**:
calculer une valeur métrique pour chacun mot de code dudit livre de codes de transmission comprend:

traiter le signal reçu sur toutes les au moins deux unités de réception de chaque dite branche de réception et ledit mot de code pour obtenir une valeur métrique temporaire correspondant à ladite branche de réception et audit mot de code; et

additionner les valeurs métriques temporaires correspondant à l'ensemble desdites une ou plusieurs branches de réception et dudit mot de code pour obtenir la valeur métrique pour ledit mot de code.

2. Le procédé selon la revendication 1, **caractérisé en ce que**,
ledit mot de code comprend M éléments et ledit M est le nombre d'unités de réception sur ladite branche de réception, et
traiter le signal reçu sur toutes les au moins deux unités de réception de chaque dite branche de réception et ledit mot de code pour obtenir une valeur métrique temporaire correspondant à ladite branche de réception et audit mot de code comprend:

multiplier une conjugaison d'un élément mth dudit mot de code par un signal reçu sur une unité de réception mth pour obtenir une valeur de démodulation correspondant à l'unité de réception mth, dans lequel m est supérieur ou égal à 1 et inférieur ou égal à M; et
additionner lesdites valeurs de démodulation correspondant à l'ensemble des unités de réception de ladite branche de réception, et prendre une valeur de sommation de la valeur de démodulations comme ladite valeur métrique temporaire correspondant à ladite branche de réception et audit mot de code.

3. Le procédé selon la revendication 1, **caractérisé en ce que**,
ledit mot de code comprend M éléments et ledit M est le nombre d'unités de réception sur ladite branche de réception, et
traiter le signal reçu sur toutes les au moins deux unités de réception de chaque dite branche de réception et ledit mot de codes pour obtenir une valeur métrique temporaire correspondant à ladite branche de réception et audit mot de code comprend:

multiplier une conjugaison d'un élément mth dudit mot de code par un signal reçu sur une unité de réception mth pour obtenir une valeur de démodulation correspondant à l'unité de réception mth, dans lequel m est supérieur ou égal à 1 et inférieur ou égal à M; et
additionner lesdites valeurs de démodulation correspondant à l'ensemble des unités de réception de ladite branche de réception, et prendre un carré d'une valeur de sommation de la valeur de démodulations comme ladite valeur métrique temporaire correspondant à ladite branche de réception et audit mot de code.

4. Le procédé selon la revendication 1, **caractérisé en ce que**,
le canal orthogonal est obtenu par une de orthogonalité dans un domaine fréquentiel, une orthogonalité, ou une combinaison de deux ou trois orthogonalités dans le domaine fréquentiel, l'orthogonalité dans le domaine temporel et l'orthogonalité dans le domaine de division de code.

5. Le procédé selon la revendication 1, **caractérisé en ce que**,
chacune des unités de réception correspond à un symbole OFDM ou à un symbole SC-FDMA.

6. Un appareil pour recevoir un signal, comprenant:

un module de réception (11) configuré pour recevoir le signal sur une ou plusieurs branches de réception, dans lequel chacune des une ou plusieurs branches de réception correspond à un canal orthogonal et comprend au moins deux unités de réception comprenant au moins une unité de réception des données et au moins une unité de réception pilote, et ledit signal est un mot de code dans un livre de codes de transmission; un module de calcul (12) configuré pour calculer une valeur métrique pour chacun mot de code dudit livre de codes de transmission en fonction dudit signal reçu et obtenir une valeur métrique maximale;
un module de démodulation (13) configuré pour déterminer le mot de code correspondant à ladite valeur métrique maximale comme une sortie de démodulation dans le cas où ladite valeur métrique maximale est supérieure à une valeur seuil, et déterminer transmission discontinue DTX comme la sortie de démodulation dans le cas où ladite valeur métrique maximale est inférieure à la valeur seuil;
**caractérisé en ce que**:
le module de calcul comprend:

une première unité de traitement (121) configurée pour traiter le signal reçu sur toutes les au moins deux unités de réception de chaque dite branche de réception et ledit mot de code pour obtenir une valeur métrique temporaire correspondant à ladite branche de réception et audit mot de code; et
une deuxième unité de traitement (122) configurée pour additionner les valeurs métriques temporaires correspondant à l'ensemble desdites une ou plusieurs branches de réception et dudit mot de code pour obtenir la valeur métrique pour ledit mot de code.

**7.** L'appareil selon la revendication 6, **caractérisé en ce que**,
ledit mot de code comprend M éléments et ledit M est le nombre d'unités de réception sur ladite branche de réception, et
ladite première unité de traitement est configurée en outre pour:

multiplier une conjugaison d'un élément mth dudit mot de code par un signal reçu sur une unité de réception mth pour obtenir une valeur de démodulation correspondant à l'unité de réception mth, dans lequel m est supérieur ou égal à 1 et inférieur ou égal à M; et
additionner lesdites valeurs de démodulation correspondant à l'ensemble des unités de réception de ladite branche de réception, et prendre une valeur de sommation de la valeur de démodulations comme ladite valeur métrique temporaire correspondant à ladite branche de réception et audit mot de code.

**8.** L'appareil selon la revendication 6, **caractérisé en ce que**,
ledit mot de code comprend M éléments et ledit M est le nombre d'unités de réception sur ladite branche de réception, et
ladite première unité de traitement est configurée en outre pour:

multiplier une conjugaison d'un élément mth dudit mot de code par un signal reçu sur une unité de réception mth pour obtenir une valeur de démodulation correspondant à l'unité de réception mth, dans lequel m est supérieur ou égal à 1 et inférieur ou égal à M; et
additionner lesdites valeurs de démodulation correspondant à l'ensemble des unités de réception de ladite branche de réception, prendre un carré d'une valeur de sommation de la valeur de démodulations comme ladite valeur métrique temporaire correspondant à ladite branche de réception et audit mot de code.

**9.** L'appareil selon la revendication 6, **caractérisé en ce que**,
le canal orthogonal est obtenu par une orthogonalité dans un domaine fréquentiel, un domaine temporel et un domaine de division de code, ou une combinaison de deux ou trois de l'orthogonalité dans le domaine fréquentiel, l'orthogonalité dans le domaine temporel et l'orthogonalité dans le domaine de division de code.

**10.** L'appareil selon la revendication 6, **caractérisé en ce que**,
chacune des unités de réception correspond à un symbole OFDM ou un symbole SC-FDMA.

Figure 1

Figure 2

301 — Receiving a signal on one or more receiving branches, wherein each of the one more receiving branches includes at least two reception units including at least one data reception unit and at least one pilot reception unit, and said signal is a codeword in a transmission codebook

302 — Calculating a metric value for each codeword in said transmission codebook according to said received signal and obtaining a maximal metric value

303 — Comparing the maximal metric value with a threshold value

said maximal metric value is smaller than the threshold value

said maximal metric value is larger than the threshold value

304 — Determining the codeword corresponding to said maximal metric value as a demodulation output

305 — Determining discontinuously-sent DTX as the demodulation output

Figure 3

11 — Receiving module

Calculation module

121 — First processing unit

12

13 — Demodulation module

122 — Second processing unit

Figure 4

2/2

**EP 2 579 535 B1**

**Patent documents cited in the description**

- EP 1913722 A1